# EUROPEAN PATENT SPECIFICATION

(11) **EP 3 756 512 B1**
(45) Date of publication and mention of the grant of the patent: **14.08.2024**
(21) Application number: 20181871.3
(22) Date of filing: 24.06.2020
(51) Int. Cl.: A47F 5/11, A47B 96/02, F16B 2/20

(54) **COUPLING ELEMENT FOR PAPERCRAFT DISPLAYS**
KOPPLUNGSELEMENT FÜR PAPIERDISPLAYS
ELEMENT DE COUPLAGE POUR PRESENTOIR EN CARTON

(30) Priority: 28.06.2019 IT 201900010365
(43) Date of publication of application: 30.12.2020
(73) Proprietor: Redbox S.R.L., 00071 Pomezia (RM) (IT)
(72) Inventor: MEUTI, Diego, 00040 Pomezia (RM) (IT)
(74) Representative: Mulas, Chiara

(56) References cited:
- WO-A1-2016/190758
- DE-U1- 202012 007 754
- FR-A1- 2 137 083
- US-A- 4 565 465

## Description

The present invention relates to a coupling element for papercraft displays.

More precisely, the present invention relates to a coupling element for coupling a shelf of a papercraft display with the side walls thereof.

Papercraft displays, particularly those used as "point-of-sale" displays (abbreviated as "POS") for displaying products in retail stores such as supermarkets, must be assembled quickly and at the same time be able to withstand sometimes considerable weights, e.g. for glass containers, as well as resist in the assembled configuration during transport.

It is therefore necessary for the shelves of the display to be firmly coupled to the side walls of the display to prevent them from coming off when the display is moved or for the load to be supported.

Coupling elements for papercraft displays are known in the prior art, generally used in pairs, one for each side wall of the display. These coupling elements comprise a first portion to be coupled below the shelf and a second portion to be coupled to a side wall.

However, the two portions of these elements of prior art have unreliable mechanical couplings as they are sometimes difficult to assemble, while at the same time are capable of being accidentally unhooked, causing serious damage if a shelf of the display is loaded.

A known coupling element is disclosed in prior art document WO 2016/190758 A1.

The object of this invention is to overcome the problems of the coupling elements of the known art.

The object of this invention is a coupling element for papercraft displays, said coupling element comprising a first portion or female portion and a separated second portion or male portion, said female portion having a flat body on which there is obtained at least one opening in correspondence of which there are two small walls projecting on said opening and opposing each other in such a way as to leave a passage space, a first small wall projecting from a first side or lower side of the opening having a half-bell shaped profile with the convex portion facing the opening, the second small wall projecting from a second side or upper side of the opening, opposite to the first side, having a curved profile with the concave portion facing the opening, said male portion having a flat body and at least one tab projecting from a face of said flat body, said at least one tab having an elongated "S" profile and a relief in correspondence of the point of curvature change of said elongated "S" profile, said coupling element being configured in such a way that said at least one tab of said male portion is adapted to be inserted in said passage space of the respective at least one opening of said female portion, locking in position when the relief portion of said tab abuts with said second small wall, resulting blocked by said two small walls of said female portion.

In particular, according to the invention, the straight line to the convex portion of said half-bell profile of said first small wall of said female portion of the coupling element may be tilted with respect to the longitudinal axis of the flat body by an angle comprised between 7° and 10°, preferably equivalent to 7°.

More specifically, according to the invention, the straight line passing through the two end points of said curved profile of said second small wall of said female portion may be tilted with respect to the longitudinal axis of the flat body by an angle comprised between 22° and 30°, preferably equivalent to 22°.

Again according to the invention, said female portion of said coupling element may comprise two openings obtained in said flat body.

Again according to the invention, said female portion of said coupling element may provide a cavity obtained on said flat body.

Finally, said female portion may comprise two openings obtained in said flat body.

Moreover, the object of the present invention is a male portion for said coupling element, characterized in having a flat body and two tabs projecting from a face of said flat body, each of said two tabs may have an elongated "S" profile and a relief in correspondence of the point of curvature change of said elongated "S" profile.

Furthermore according to the invention, the straight line to the convex portion of the first curve of said elongated "S" profile of said tab may be tilted with respect to the longitudinal axis of the flat body by an angle comprised between 100° and 120°, preferably equivalent to 110°.

Preferably according to the invention, said male portion may have a plurality of linear reliefs on said flat body.

Again according to the invention, said male portion may have a plurality of ribs in correspondence of the side of said flat body on which said at least one tab is present.

In addition, according to the invention, said coupling element may comprise a male portion as described above.

Finally, the object of the present invention is a papercraft display comprising at least one wall and at least one shelf, said papercraft display being characterized in comprising at least one coupling element as described above, wherein the female portion is solidly coupled to said wall of said display and the male portion is solidly coupled to said shelf.

The invention is now described, by way of example and without limiting the scope of the invention, with reference to the accompanying drawings, in which:
Figure 1a shows a front view of a first portion or female portion of the coupling element according to the invention;
Figure 1b is a side view of the first portion of figure 1a of the coupling element according to the invention;
Figure 1c is a top view of the first portion of figure 1a of the coupling element according to the invention;
Figure 1d is a bottom view of the first portion of figure 1a of the coupling element according to the invention;
Figure 1e is a rear view of the first portion of figure 1a of the coupling element according to the invention;
Figure 2a shows a top view of a second portion or male portion of the coupling element according to the invention;
Figure 2b is a side view of the second portion of figure 2a of the coupling element according to the invention;
Figure 2c is a bottom view of the second portion of figure 2a of the coupling element according to the invention;
Figure 2d is a front view of the second portion of figure 2a of the coupling element according to the invention;
Figure 2e is a rear view of the second portion of figure 2a of the coupling element according to the invention;
Figure 3 is a perspective view of the coupling element according to the invention, comprising the female portion of Figure 1a and the male portion of Figure 2a;
Figure 4 is a side view of the coupling element of Figure 3;
Figure 5 is a top perspective view of the coupling element of Figure 3;
Figure 6 is a rear view of the coupling element of Figure 3;
Figure 7 is a perspective view of the display according to the invention, comprising the coupling element according to the invention; and
Figures 8a and 8b show perspective views of the display in figure 7 during the hooking of the two portions of the coupling element according to the invention.

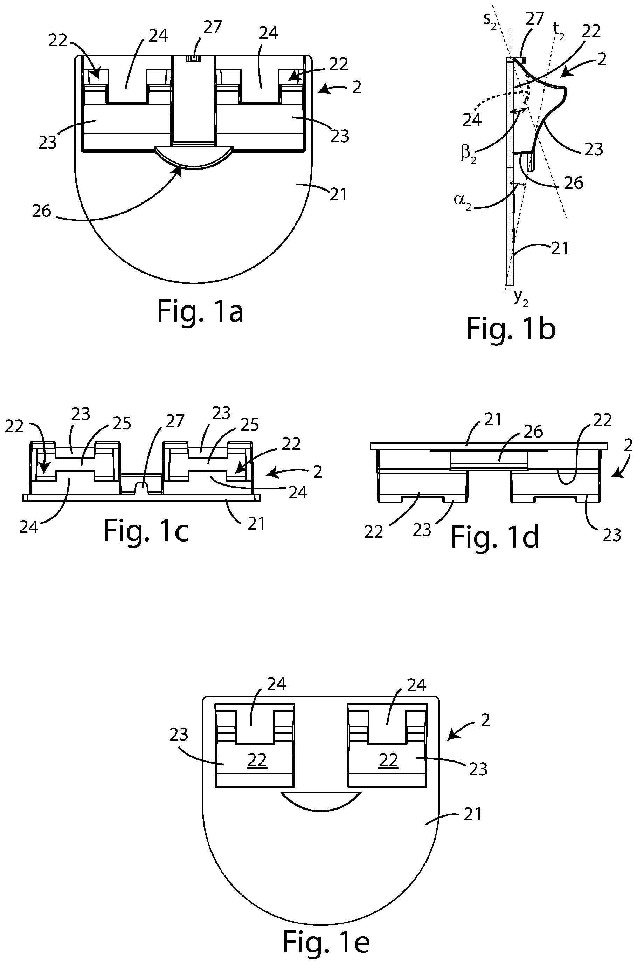

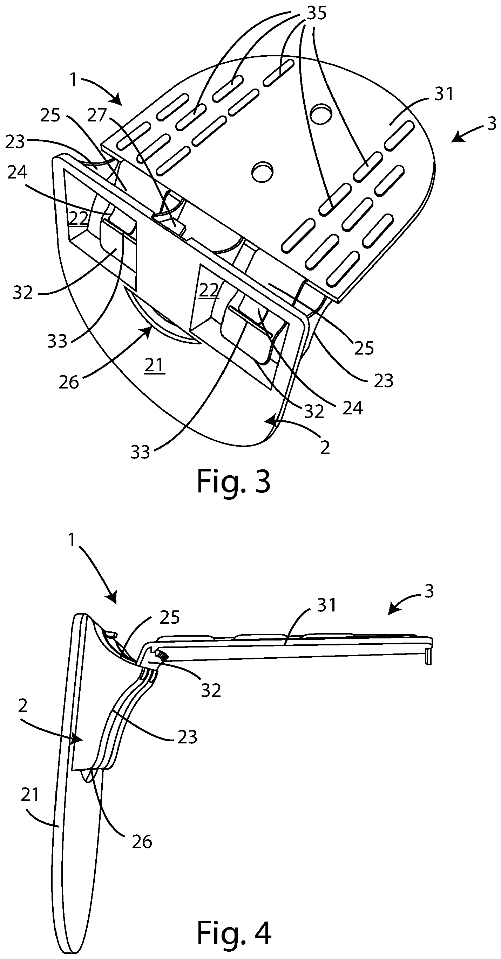

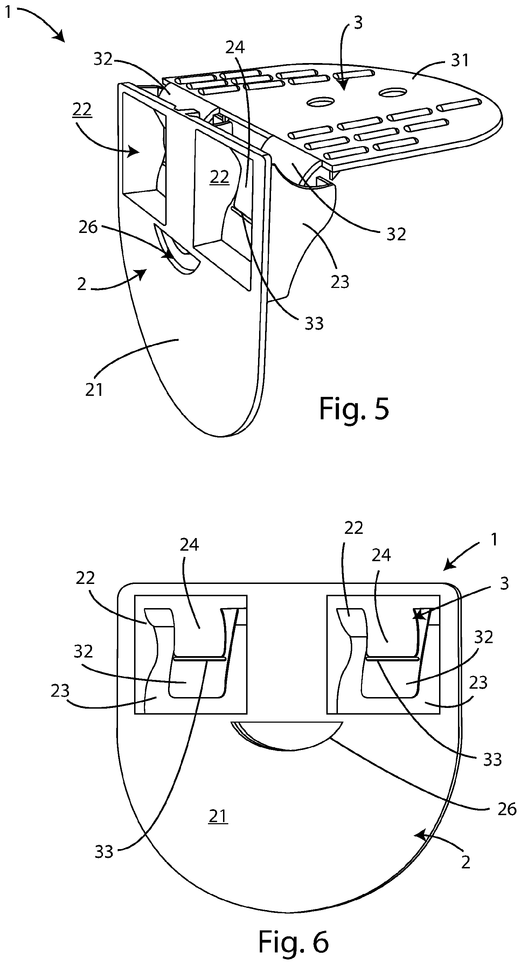

Figures 1 - 8 show the coupling element for papercraft displays indicated with the numerical reference 1.

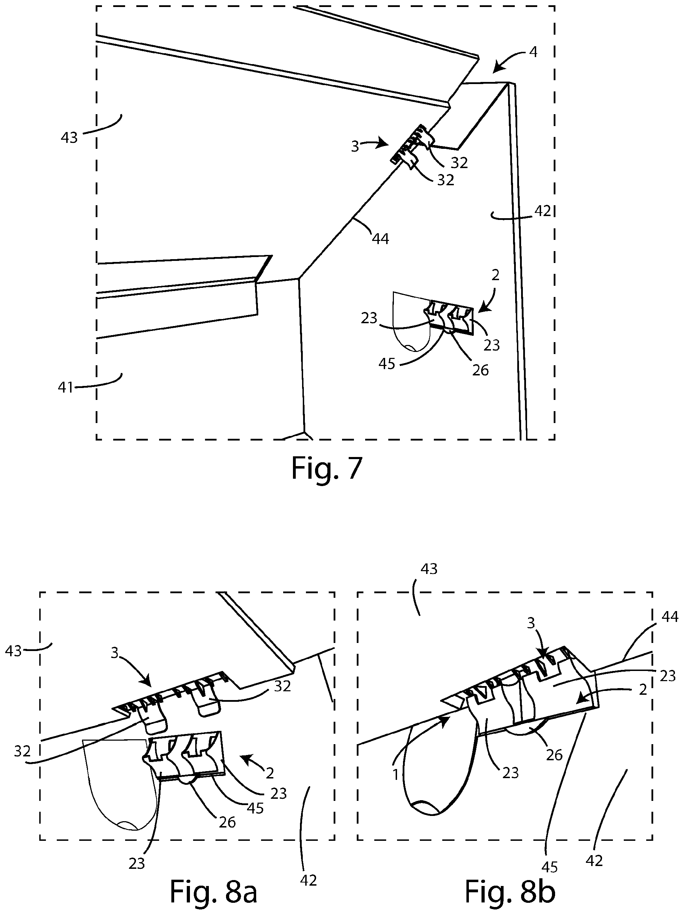

A papercraft display 4 (shown in Figures 7 and 8a and 8b) has a back wall 41 and two side walls 42, each adjacent to a side of the back wall 41. Moreover, such display 4 has a plurality of shelves 43 for supporting the goods or products to be displayed.

The coupling element 1 according to the invention is used to couple and support the shelf 43 of a papercraft display 4 in correspondence of a side wall 42 or back wall thereof. In particular, at least two coupling elements 1 may be used, each one arranged in correspondence of one of the two side walls 42 of the papercraft display 4.

The coupling element 1 according to the invention comprises a first portion or female portion 2 and a separated second portion or male portion 3.

As shown in particular in Figures 1a - 1e, the female portion 2 has a flat body 21 on which two openings 22 are obtained. In other embodiments, said female portion 2 may also have only one opening 22 or several openings 22.

In correspondence of each opening 22, there are two small walls 23, 24 projecting on said opening 22 and opposing each other in such a way as to leave a free passage space 25.

A first small wall 23 projects from a first side or lower side of the opening 22 and has a half-bell shaped profile with the convex portion facing the opening 22.

The second small wall 24 projects from a second side or upper side of the opening 22, opposite to the first side, and has a curved profile with the concave portion facing the opening 22.

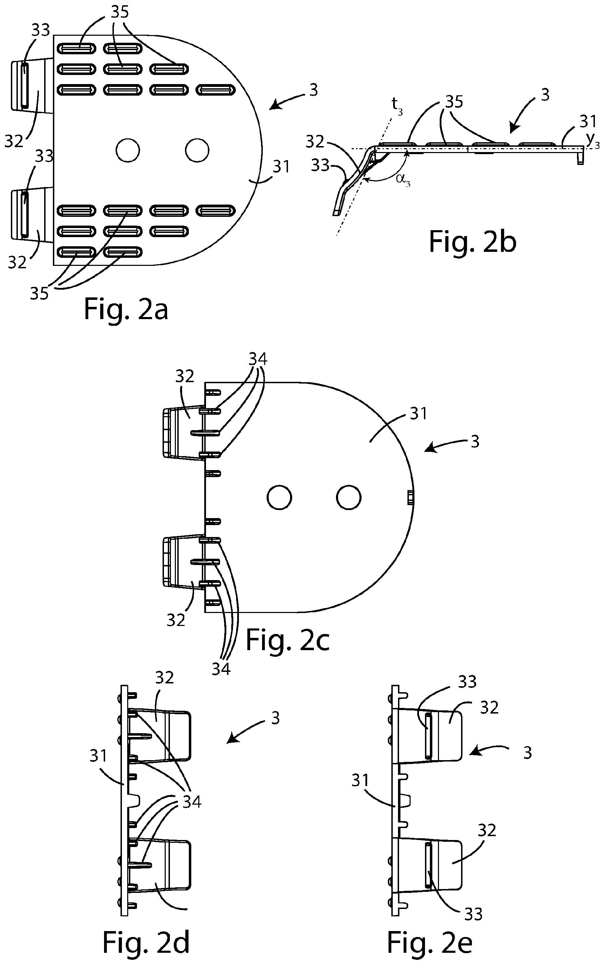

It is worth noting from Figures 2a - 2e that the male portion 3 has a flat body 31 and two tabs 32 projecting from a face of said flat body 31. In other embodiments, said male portion 3 may also have only one tab 32 or several tabs 32. In particular, it may have the same number of tabs 32 as the number of openings 22 obtained in the female portion 2.

Each tab 32 has an elongated "S" profile and also has a relief 33 in correspondence of the point of curvature change of said elongated "S" profile.

The coupling element 1 is configured in such a way that each tab 32 of the male portion 3 is adapted to be inserted in the passage space 25 of the respective opening 22 of the female portion 2, locking in position when the relief portion 33 of the tab 32 abuts with the second small wall 23, resulting blocked by said two small walls 23, 24 of said female portion 2.

In particular, as shown in Figures 7 and 8a and 8b, when said coupling element 1 is used in conjunction with a papercraft display 4, the female portion 2 is coupled in correspondence with the flat body 21 thereof to the surface of a wall, e.g. a side wall 42, with the small walls 23 and 24 projecting towards the inside of the papercraft display 4.

The flat body 31 of the male portion 3 instead is coupled to the lower surface of a shelf 43 of the display 4, in correspondence with an edge thereof, e.g. the side edge 44 thereof.

By coupling and locking in position the male portion 3 with the female portion 2 of the coupling element 1, the shelf 43 of the display 4 is securely and firmly fastened to a wall 42 of the display 4, in this example to the side wall 42.

Preferably therefore, when the male portion 3 is coupled to the female portion 2, the respective flat bodies 31 and 21 substantially are arranged in perpendicular planes to each other.

During use therefore, the female portion 2 remains fastened on the side wall 42 of the display 4 and by lowering, preferably by turning, the shelf 43 to a position transverse to the side wall 42 of the display 4, each tab 32 of the male portion 3 engages with said small walls 23 and 24 of said female portion, locking the shelf 43 into position.

Preferably, said coupling element 1 according to the invention is made of polymeric material, preferably a styrene-butadiene block copolymer, even more preferably, KIBITON^{®} PB-5903.

Moreover, said coupling element 1 may be made of biodegradable material, e.g. PBAT.

As described above, the first small wall 23 of the female portion 2 has a half-bell profile. In other words, said half-bell profile is formed by a straight portion in correspondence of the lower side of the opening 2, and by a sigmoid curve-shaped portion, in which a first curve is wider than the second curve.

Preferably, said first small wall 23 may be shaped so that the straight line t₂ to the convex portion of said half-bell profile of said first small wall 23 is tilted with respect to the longitudinal axis y₂ of the flat body 21 by an angle α₂ comprised between 7° and 10°, preferably equivalent to 7°.

In other words, the straight line t₂ is measured in correspondence of the point of intersection between the straight portion and the first curve of the sigmoid shape of the half-bell profile of the first small wall 23.

Again according to the invention, the second small wall 24 may be shaped so that a straight line s₂ passing between the two end points of the curved profile of said second small wall 24 is tilted with respect to the longitudinal axis y₂ of the flat body 21 by an angle β₂ comprised between 22° and 30°, preferably equivalent to 22°.

Preferably, said female portion 2 may have a slot 26 obtained on said flat body 21, capable of coupling to the side wall 42 of the display 4 on which it is assembled. In particular, the side wall 42 of the papercraft display may have a flap 45 capable of being inserted in such slot 26.

Moreover, said female portion 2 may provide a tooth 27 in correspondence of a side of said flat body 21.

With reference to Figures 2a - 2e, the characteristics of the male portion 3 can be observed in more detail.

In other words, the elongated "S" profile of each tab 32 has a sigmoid shape.

Preferably, the tab 32 of the male portion 3 may be shaped so that a straight line ts to the convex portion of the first curve of said elongated "S" profile of said tab 32 is tilted with respect to the longitudinal axis y₃ of the flat body 31 by an angle α₃ comprised between 100° and 120°, preferably equivalent to 110°.

More specifically, said straight line ts is measured in correspondence of the point of intersection with the flat body 31 of the male portion 3.

Again according to the invention, the flat body 31 of the male portion 3 may have a plurality of linear reliefs 35 on said flat body 31. Said linear reliefs 35 advantageously prevent the displacement of the male portion 3 when glued to shelf 43 of the papercraft display 4, in particular between two layers of papercraft material that make up shelf 43.

Moreover, said male portion 3 may have a plurality of ribs 34 in correspondence with the side of said flat body 31 on which there is said at least one tab 32.

Advantageously, the coupling element according to the invention facilitates the coupling, in particular the hooking, between the male and female portion, and therefore the safe coupling between the shelf and the side wall of a papercraft display.

Again, advantageously the coupling element according to the invention further improves the resistance between the male and female portions, preventing accidental releasing.

The preferred embodiments have been described above and variants to the invention have been suggested, but it shall be understood that the invention may be modified and/or adapted by experts in the field without thereby departing from the scope of the inventive concept, as defined in the claims herein.

## Claims

1. A coupling element (1) for papercraft displays (4), said coupling element (1) comprising a first portion or female portion (2) and a separated second portion or male portion (3),
said female portion (2) having a flat body (21) on which there is obtained at least one opening (22) in correspondence of which there are two small walls (23, 24) projecting on said opening (22) and opposing each other in such a way as to leave a passage space (25),
a first small wall (23) projecting from a first side or lower side of the opening (22) having a half-bell shaped profile with the convex portion facing the opening (22),
the second small wall (24) projecting from a second side or upper side of the opening (22), opposite to the first side, having a curved profile with the concave portion facing the opening (22),
said male portion (3) having a flat body (31) and at least one tab (32) projecting from a face of said flat body (31),
said at least one tab (32) having an elongated "S" profile and having a relief (33) in correspondence of the point of curvature change of said elongated "S" profile,
said coupling element (1) being configured in such a way that said at least one tab (32) of said male portion (3) is adapted to be inserted in said passage space (25) of the respective at least one opening (22) of said female portion (2), locking in position when the relief portion (33) of said tab (32) abuts with said second small wall (23), resulting blocked by said two small walls (23, 24) of said female portion (2).

2. The coupling element (1) according to the previous claim, **characterized in that** the straight line (t₂) to the convex portion of said half-bell profile of said first small wall (23) of said female portion (2) is tilted with respect to the longitudinal axis (y₂) of the flat body (21) by an angle (α₂) comprised between 7° and 10°, preferably equivalent to 7°.

3. The coupling element (1) according to claim 1 or 2, **characterized by** the fact that the straight line (s₂) passing between the two end points of said curved profile of said second small wall (24) of said female portion (2) is tilted with respect to the longitudinal axis (y₂) of the flat body (21) by an angle (β₂) comprised between 22° and 30°, preferably equivalent to 22°.

4. The coupling element (1) according to any one of the claims 1 - 3, **characterized in that** said female portion (2) provides a cavity (26) obtained on said flat body (21).

5. The coupling element (1) according to any one of the claims 1-4, **characterized in that** said female portion (2) comprises two openings (22) obtained in said flat body (21).

6. The male portion (3) of the coupling element (1) according to any one of claims 1 - 5, **characterized in** having a flat body (31) and two tabs (32) projecting from a face of said flat body (31),
each of said two tabs (32) having an elongated "S" profile and having a relief (33) in correspondence of the point of curvature change of said elongated "S" profile,
said male portion (3) being configured in such a way that when it is coupled to the female portion (2) of said coupling element (1), said two tabs (32) are adapted to be inserted in a passage space (25) of the respective opening (22) of said female portion (2), locking in position when the relief portion (33) of each of said tabs (32) abuts with said second small wall (23) of said female portion (2), resulting blocked by the two small walls (23, 24) of said female portion (2).

7. The male portion (3) according to the previous claim, **characterized in that** the straight line (t₃) to the convex portion of the first curve of said elongated "S" profile of said tab (32) is tilted with respect to the longitudinal axis (y₃) of the flat body (31) by an angle (α₃) comprised between 100° and 120°, preferably equivalent to 110°.

8. The male portion (3) according to claim 6 or 7, **characterized by** having a plurality of linear reliefs (35) on said flat body (31).

9. The male portion (3) according to any one of the claims 6-8, **characterized in** having a plurality of ribs (34) in correspondence with the side of said flat body (31) on which there is said at least one tab (32).

10. The coupling element (1) according to claim 5, **characterized in** comprising a male portion (3) according to any one of claims 6-9.

11. A papercraft display (4) comprising at least one wall (42) and at least one shelf (43), said display (4) being **characterized in** comprising at least one coupling element (1) according to any one of the claims 1 - 5 or 10, wherein the female portion (2) is solidly coupled to said wall (42) of said display (4) and the male portion (3) is solidly coupled to said shelf (43) of said display (4).

## Patentansprüche

1. Kupplungselement (1) für Displays aus Papier (4), wobei das Kupplungselement (1) einen ersten Teil oder weiblichen Teil (2) und einen getrennten zweiten Teil oder männlichen Teil (3) umfasst,
wobei der aufnehmende Abschnitt (2) einen flachen Körper (21) aufweist, auf dem mindestens eine Öffnung (22) erhalten wird, in deren Entsprechung zwei kleine Wände (23, 24) vorhanden sind, die auf der Öffnung (22) vorstehen und einander gegenüberliegen, so dass ein Durchgangsraum (25) verbleibt,
eine erste kleine Wand (23), die von einer ersten Seite oder Unterseite der Öffnung (22) vorsteht und ein halbkugelförmiges Profil aufweist, wobei der konvexe Teil der Öffnung (22) zugewandt ist,
die zweite kleine Wand (24), die von einer zweiten Seite oder Oberseite der Öffnung (22), die der ersten Seite gegenüberliegt, vorsteht, ein gekrümmtes Profil aufweist, wobei der konkave Teil der Öffnung (22) zugewandt ist,
wobei der männliche Teil (3) einen flachen Körper (31) und mindestens eine Lasche (32) aufweist, die von einer Fläche des flachen Körpers (31) vorsteht,
wobei die mindestens eine Lasche (32) ein längliches "S"-Profil und ein Relief (33) in Übereinstimmung mit dem Punkt der Krümmungsänderung des länglichen "S"-Profils aufweist,
wobei das Kupplungselement (1) so konfiguriert ist, dass die mindestens eine Lasche (32) des männlichen Teils (3) in den Durchgangsraum (25) der jeweiligen mindestens einen Öffnung (22) des weiblichen Teils (2) eingeführt werden kann, wobei es in seiner Position verriegelt, wenn der Reliefabschnitt (33) der Lasche (32) an der zweiten kleinen Wand (23) anliegt, was zu einer Blockierung durch die beiden kleinen Wände (23, 24) des weiblichen Teils (2) führt.

2. Kupplungselement (1) nach dem vorhergehenden Anspruch, **dadurch gekennzeichnet, dass** die gerade Linie (t₂) zum konvexen Teil des Halbglockenprofils der ersten kleinen Wand (23) des weiblichen Teils (2) in Bezug auf die Längsachse (y₂) des flachen Körpers (21) um einen Winkel (α₂) geneigt ist, der zwischen 7° und 10° liegt und vorzugsweise 7° entspricht.

3. Kupplungselement (1) nach Anspruch 1 oder 2, **dadurch gekennzeichnet, dass** die gerade Linie (s₂), die zwischen den beiden Endpunkten des gekrümmten Profils der zweiten kleinen Wand (24) des weiblichen Teils (2) verläuft, in Bezug auf die Längsachse (y₂) des flachen Körpers (21) um einen Winkel (β₂) geneigt ist, der zwischen 22° und 30° liegt und vorzugsweise 22° entspricht.

4. Kupplungselement (1) nach einem der Ansprüche 1-3, **dadurch gekennzeichnet, dass** der aufnehmende Teil (2) einen Hohlraum (26) bildet, der auf dem flachen Körper (21) erhalten wird.

5. Kupplungselement (1) nach einem der Ansprüche 1-4, **dadurch gekennzeichnet, dass** der weibliche Teil (2) zwei Öffnungen (22) aufweist, die in dem flachen Körper (21) ausgebildet sind.

6. Männliche Teil (3) des Kupplungselements (1) nach einem der Ansprüche 1-5, **dadurch gekennzeichnet, dass** er einen flachen Körper (31) und zwei Laschen (32) aufweist, die von einer Fläche des flachen Körpers (31) vorstehen,
wobei jede der beiden Laschen (32) ein längliches "S"-Profil und ein Relief (33) in Übereinstimmung mit dem Punkt der Krümmungsänderung des länglichen "S"-Profils aufweist,
wobei der männliche Teil (3) so konfiguriert ist, dass, wenn er mit dem weiblichen Teil (2) des Kupplungselements (1) gekoppelt ist, die beiden Laschen (32) so angepasst sind, dass sie in einen Durchgangsraum (25) der jeweiligen Öffnung (22) des weiblichen Teils (2) eingeführt werden können, wobei sie in ihrer Position verriegeln, wenn der Reliefteil (33) jeder der Laschen (32) an die zweite kleine Wand (23) des weiblichen Teils (2) anstößt, wodurch sie durch die beiden kleinen Wände (23, 24) des weiblichen Teils (2) blockiert werden.

7. Männliche Teil (3) nach dem vorhergehenden Anspruch, **dadurch gekennzeichnet, dass** die gerade Linie (t₃) zum konvexen Teil der ersten Kurve des länglichen "S"-Profils der Lasche (32) in Bezug auf die Längsachse (y₃) des flachen Körpers (31) um einen Winkel (α₃) zwischen 100° und 120°, vorzugsweise gleich 110°, geneigt ist.

8. Männliche Teil (3) nach Anspruch 6 oder 7, **dadurch gekennzeichnet, dass** der flache Körper (31) eine Vielzahl von linearen Erhebungen (35) aufweist.

9. Männliche Teil (3) nach einem der Ansprüche 6-8, **dadurch gekennzeichnet, dass** es eine Vielzahl von Rippen (34) in Übereinstimmung mit der Seite des flachen Körpers (31) aufweist, auf der sich die mindestens eine Lasche (32) befindet.

10. Kupplungselement (1) nach Anspruch 5, **dadurch gekennzeichnet, dass** es einen männlichen Teil (3) nach einem der Ansprüche 6-9 umfasst.

11. Display aud Papier (4) mit mindestens einer Wand (42) und mindestens einem Regal (43), wobei das Display (4) **dadurch gekennzeichnet ist, dass** es mindestens ein Kupplungselement (1) nach einem der Ansprüche 1-5 oder 10 umfasst, wobei der weibliche Teil (2) fest mit der Wand (42) des Displays (4) und der männliche Teil (3) fest mit dem Regal (43) des Displays (4) verbunden ist.

## Revendications

1. Élément de couplage (1) pour présentoirs en carton (4), ledit élément de couplage (1) comprenant une première partie ou partie femelle (2) et une deuxième partie séparée ou partie mâle (3),
ladite partie femelle (2) a un corps plat (21) sur lequel on obtient au moins une ouverture (22) en correspondance de laquelle il y a deux petites parois (23, 24) faisant saillie sur ladite ouverture (22) et s'opposant l'une à l'autre de manière à laisser un espace de passage (25), une première petite paroi (23) faisant saillie d'un premier côté ou côté inférieur de l'ouverture (22) ayant un profil en forme de demi-cloche avec la partie convexe tournée vers l'ouverture (22),
la seconde petite paroi (24) faisant saillie d'un second côté ou côté supérieur de l'ouverture (22), opposé au premier côté, ayant un profil incurvé avec la partie concave faisant face à l'ouverture (22), ladite partie mâle (3) comporte un corps plat (31) et au moins une languette (32) faisant saillie sur une face dudit corps plat (31),
ladite au moins une languette (32) présente un profil en "S" allongé et un relief (33) correspondant au point de changement de courbure dudit profil en "S" allongé, ledit élément de couplage (1) est configuré de telle sorte que ladite au moins une languette (32) de ladite partie mâle (3) est adaptée pour être insérée dans ledit espace de passage (25) de l'au moins une ouverture (22) respective de ladite partie femelle (2), se verrouillant en position lorsque la partie en relief (33) de ladite languette (32) vient en butée contre ladite deuxième petite paroi (23), résultant bloquée par lesdites deux petites parois (23, 24) de ladite partie femelle (2).

2. Élément de couplage (1) selon la revendication précédente, **caractérisé en ce que** la ligne droite (t₂) vers la partie convexe dudit profil en demi-cloche de ladite première petite paroi (23) de ladite partie femelle (2) est inclinée par rapport à l'axe longitudinal (y₂) du corps plat (21) d'un angle (α₂) compris entre 7° et 10°, de préférence équivalent à 7°.

3. Élément de couplage (1) selon la revendication 1 ou 2, **caractérisé par le fait que** la ligne droite (s₂) passant entre les deux points d'extrémité dudit profil courbe de ladite deuxième petite paroi (24) de ladite partie femelle (2) est inclinée par rapport à l'axe longitudinal (y₂) du corps plat (21) d'un angle (β₂) compris entre 22° et 30°, de préférence équivalent à 22°.

4. Élément de couplage (1) selon l'un quelconque des points 1-3, **caractérisé en ce que** ladite partie femelle (2) fournit une cavité (26) obtenue sur ledit corps plat (21).

5. Élément de couplage (1) selon l'une quelconque des revendications 1-4, **caractérisé en ce que** ladite partie femelle (2) comprend deux ouvertures (22) obtenues dans ledit corps plat (21).

6. Partie mâle (3) de l'élément de couplage (1) selon l'une quelconque des revendications 1-5, **caractérisée en ce qu'**elle comporte un corps plat (31) et deux languettes (32) faisant saillie sur une face dudit corps plat (31), chacune de ces deux languettes (32) ayant un profil en "S" allongé et présentant un relief (33) en correspondance avec le point de changement de courbure dudit profil en "S" allongé, ladite partie mâle (3) est configurée de telle sorte que lorsqu'elle est accouplée à la partie femelle (2) dudit élément de couplage (1), lesdites deux languettes (32) sont adaptées pour être insérées dans un espace de passage (25) de l'ouverture respective (22) de ladite partie femelle (2), se verrouillant en position lorsque la partie en relief (33) de chacune desdites languettes (32) vient en butée contre ladite deuxième petite paroi (23) de ladite partie femelle (2), résultant bloquée par les deux petites parois (23, 24) de ladite partie femelle (2).

7. Partie mâle (3) selon la revendication précédente, **caractérisée en ce que** la ligne droite (t₃) vers la partie convexe de la première courbe dudit profil allongé en "S" de ladite languette (32) est inclinée par rapport à l'axe longitudinal (y₃) du corps plat (31) d'un angle (α₃) compris entre 100° et 120°, de préférence équivalent à 110°.

8. Partie mâle (3) selon la revendication 6 ou 7, **caractérisée par** la présence d'une pluralité de reliefs linéaires (35) sur ledit corps plat (31).

9. Partie mâle (3) selon l'une quelconque des revendications 6-8, **caractérisée par** la présence d'une pluralité de nervures (34) en correspondance avec le côté dudit corps plat (31) sur lequel se trouve ladite au moins une languette (32).

10. Élément de couplage (1) selon la revendication 5, **caractérisé en ce qu'**il comprend une partie mâle (3) selon l'une quelconque des revendications 6-9.

11. Présentoir en carton (4) comprenant au moins une paroi (42) et au moins une étagère (43), ledit présentoir (4) étant **caractérisé en ce qu'**il comprend au moins un élément de couplage (1) selon l'une quelconque des revendications 1-5 ou 10, dans lequel la partie femelle (2) est solidement couplée à ladite paroi (42) dudit présentoir (4) et la partie mâle (3) est solidement couplée à ladite étagère (43) dudit présentoir (4).
